# EUROPEAN PATENT APPLICATION

(11) **EP 2 007 014 A1**
(43) Date of publication of application: **24.12.2008**
(21) Application number: 06799628.0
(22) Date of filing: 24.03.2006
(51) Int. Cl.: H03M 1/00, G06T 17/00

(54) **INFORMATION ENCODING AND DECODING METHOD**

(71) Applicant: Zuev, Boris Alexandrovich, Kurskaya obl., 125080 (RU)
(72) Inventor: DUBINA, Nikolai Nikolaevich, Moskovskaya obl., 140013 (RU)
(74) Representative: Le Forestier, Eric
(86) International application number: PCT/RU2006/000143
(87) International publication number: WO 2007/013835

(57) **Abstract**

The method of encoding text and graphical information consists in pre-building a code conversion table, wherein different colours, nuances, geometrical shapes or configurations or the combinations thereof corresponding to recognizable characters, including figures and symbols, are determined, in encoding required data items by using the code conversion table, in forming data areas provided with a code image and in obtaining the image in the form of a physical or electronic code. Said invention is **characterized in that**, during the code conversion table setting, a three-dimensional matrix is used, said matrix is divided throughout the height into fragments, each of which comprises a combination of empty and filled cells corresponding to one unit of data items used for encoding, in assigning to each fragment the colour or nuance or graphical symbol or the combination thereof belonging thereto and in obtaining the code image by sequentially projecting the fragments on the plane and in overlapping said fragments along two mutually perpendicular parameters. Graphical, video, audio information is pre-converted by the executable files with the aid of a MIME processing method (Base 64), UUEncode, XXEncode or with the aid of the own additional encode vocabulary.

## Description

The present invention relates to the field of protection of products and security papers against forgery and more particularly concerns the information encoding and decoding method and devices to implement thereof.

### Background of the Invention

At present the majority of product packages, identification documents, as well as the most forged forms have a bar code placed thereon and consisting of lines of various thicknesses intended for presenting different information and identification. There are also other methods for encoding information. So, in the closest analog of the present invention (cf. patent RU 2251734 C2 of 10.05.2005) disclosed is a method of encoding information by building a two-dimensional matrix structure, comprising setting a code conversion table, wherein different colours, nuances, shapes or configurations or combinations thereof corresponding to recognizable characters, including figures and symbols, are determined, setting required data items used for encoding, encoding the required data items by using the code conversion table and forming data areas provided with a code image figured in the form of a sequence of colours, nuances, shapes or configurations or combinations thereof and obtaining the image in the form of a physical or electronic code.

However, all these methods have serious restrictions in the volume of the information being encoded because of the linear nature of encoding. For the same reason, none of the proposed methods contemplates encoding graphical, multimedia and other information that can be presented in the electronic form for further close-together arrangement thereof, for example, on label-packing products or identification documents.

### Disclosure of the Invention

The present invention is based on an object to set up a method of encoding (decoding) information allowing to obtain a compacted visual code image capable of holding the essentially more information volume compared to the similar known code images allowing encoding graphical, video, audio information and the executable files, as well as producing an encoding apparatus to implement this method.

The assigned object is accomplished by that in the information encoding method consists in setting a code conversion table, wherein different colours, nuances, geometrical shapes or configurations or combinations thereof corresponding to recognizable characters, including figures and symbols, are determined, in setting data items used for encoding, in encoding these data items by using the code conversion table and forming data areas provided with a code image, and in obtaining the image in the form of a physical or electronic code built on the basis of the code image in the data areas, according to the invention, during the code conversion table setting a three-dimensional matrix is used, said matrix is divided throughout the height into fragments, each of which comprises a combination of empty and filled cells corresponding to one unit of data items used for encoding, in assigning to each fragment the colour or nuance, or graphical symbol or the combination thereof belonging thereto, in obtaining the code image by sequentially projecting the fragments on the plane and in overlapping said fragments along two mutually perpendicular parameters.

As a unit of data items used for encoding, a single recognizable character or the combination of several characters may be used.

If graphical, video, audio information is encoded, it is pre-converted by the executable files with the aid of a MIME processing (Base 64), UUEcode, XXEncode or with the aid of the own additional encode vocabulary.

In setting the code conversion table the correspondence between colours, nuances, geometrical shapes and recognizable characters is desired to be set by using a random number generator.

In the preferred embodiment the visual code image is presented in the form of a lattice comprising m x n fields, wherein m and n are the numbers of lines and columns of the three-dimensional base matrix, each filled field comprising as many different colours or nuances or shapes and orientations as the filled cells projected on this field comprise fragments of the matrix.

It is appropriate for at least one of the matrix fragments to generate a combination representing the reference data items and by using said combination to find the control areas used to determine if the image formed in the data areas is suitable for using as required data items.

A fragment of the three-dimensional matrix may have a two-dimensional structure or a three-dimensional, at least bi-level structure.

It is preferred for each unit of data items used for encoding to create an additional duplicating combination of empty and filled cells.

At least a part of the data items used for encoding may be pre-encrypted.

The assigned object is also accomplished by that the method of decoding the code image presented as a lattice comprising m x n fields, wherein m and n are the numbers of lines and columns of the three-dimensional base matrix consists in acquiring the code image, in determining the data areas in which the required data items are encoded and presented as images in colours, nuances, shapes or configurations or the combinations thereof and the reference area comprising basic colours, nuances, shapes or configurations, or the combinations thereof, in recognizing correct colours, nuances, shapes or configurations or the combinations thereof in the images presented in the data areas, in normalizing the colours, nuances, shapes or configurations or the combinations thereof in the acquired image by comparing with the image in the reference area, in restoring the structure of the three-dimensional matrix and in separating the fragments thereof comprising combinations of empty and filled cells representing encoded required data items, in decoding the encoded required data items consisting of recognizable characters, including figures and symbols, determined in the code conversion table used during encoding.

In the case of obtaining pre-encrypted information after completing the process of decoding the required data items to implement the data decoding by inverse conversion with the aid of corresponding used encryption method is preferable.

The decoded required data items comprising graphical, audio, video information are inverted by the executable files with the aid of a MIME processing method (BASE 64), UUEncode, XXEncode or with the aid of the own additional encode vocabulary

Moreover, the assigned object is accomplished by that the information encoding apparatus comprises an accumulation unit capable of implementing a frequency analysis of text information, forming and recording the code conversion table on the basis of accordance of the combinations of filled cells in the fragments of the three-dimensional matrix to the recognizable characters of the text information, including symbols, figures and the combinations thereof, a data areas forming unit capable of acquiring and encoding the required data items by using the code conversion table and forming the structure of the three-dimensional matrix assigning unique colour, tonal and shape-generating features to the fragments thereof, a reference areas forming unit capable of determining during decoding if the image shaped in the data area is a code image, a code image generating unit capable of shaping a physical or electronic code image in the form of a projection on the plane of the three-dimensional matrix provided with encoded data items and a unit for outputting the shaped code image in the physical or electronic form.

In the preferred embodiment the encoding apparatus additionally comprises an encryption unit capable of pre-encrypting at least a part of the data items used for encoding.

Moreover, the encoding apparatus may additionally comprise a unit for converting data presented in the electronic form with the aid of the MIME methods (Base 64), UUEncode, XXEncode or the with the aid of the own additional encode vocabulary.

The assigned object is further accomplished by that the code image decoder presented in the form of a two-dimensional lattice comprising m x n fields, wherein m and n are the numbers of lines and columns of the three-dimensional base matrix projected in fragments throughout the height on the plane, comprises a data storage unit used in encoding the code conversion table, wherein the correspondences of the combinations of filled cells in the fragments of the three-dimensional matrix to the recognizable characters, including symbols, figures and the combinations thereof are determined, an acquisition code image unit, a recognizer of the reference areas in the acquired code image, a unit for normalizing colours, nuances, shapes and the combinations thereof in the acquired image on the basis of the reference areas image, a unit for restoring the structure of the three-dimensional matrix and separating the fragments thereof comprising the data areas, a unit for forming the data areas and decoding the required data items by using the code conversion table data.

In the preferred embodiment the decoding apparatus additionally comprises a decryption unit capable of obtaining the required data items encrypted before encoding.

Moreover, in the preferred embodiment the decoding apparatus additionally comprises a unit for data inverse conversion by using the MIME methods (Base 64), UUEncode, XXEncode or with the aid of the own additional encode vocabulary.

### Brief Description of the Drawings

Hereinafter the invention is explained by the description of specific embodiments thereof and the drawings enclosed, wherein:
Fig.1 illustrates a two-dimensional minimum volume fragment of 2 x 1 cells;
Fig.2 - a three-dimensional matrix comprising two two-dimensional fragments, each 2 x 2 cells in volume;
Fig.3 - a bi-level fragment, 2 x 3 x 3 cells in volume;
Fig.4 - a three-level fragment, 3 x 3 x 3 cells in volume;
Fig.5 - a three-dimensional matrix divided into five bi-level fragments throughout the height;
Fig.6 - a code image obtained after projecting the matrix presented in fig. 5 on the plane;
Fig.7 - the same code image as in fig.6 additionally using a shape;
Fig.8 - a sequence chart illustrating the encoding method;
Fig.9 - an image encoding apparatus, general view;
Fig.10 - a block diagram of the image encoding apparatus;
Fig.11 - a sequence chart illustrating the decoding method;
Fig.12 - a code image decoding apparatus, general view;
Fig.13 - a block diagram of the image decoding apparatus;

### The Best Embodiments of the Invention.

The information encoding method, according to the invention, is characterized in that for data encoding a three-dimensional matrix is used, in the space structure of said matrix the data area is shaped.

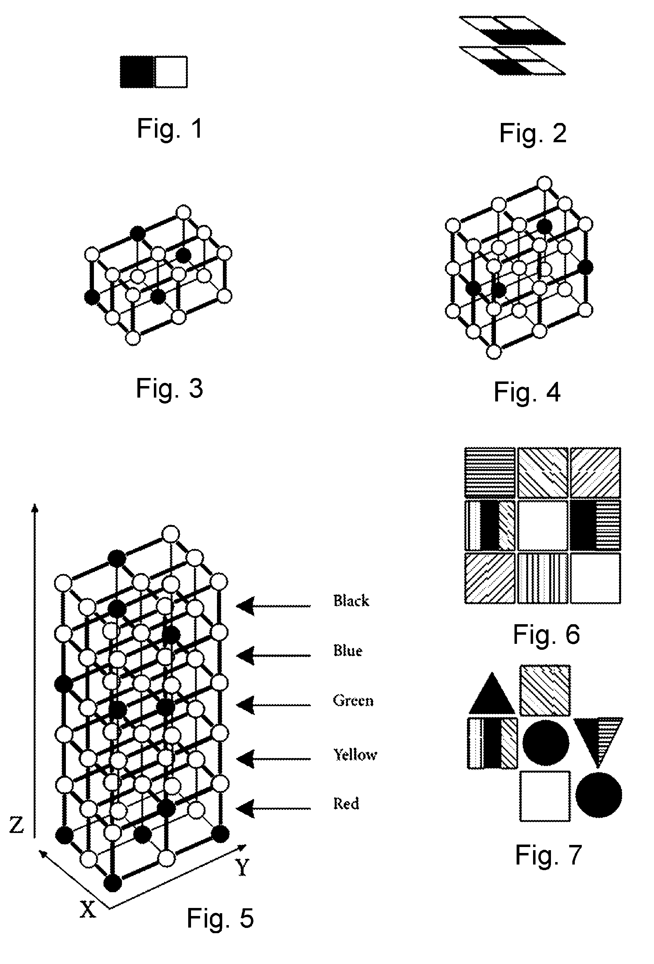

If in using, as it takes place in the known encoding methods, a two-dimensional matrix only one character may be encoded in one separated therefor data cell, said cell is encoded and expressed by using different colours, in using a three-dimensional matrix this restriction is lifted by adding one more dimension. For encoding information by using a three-dimensional matrix first it is necessary to determine the sizes thereof taking into account the number of recognizable characters in the volume of data items used for encoding. The minimum size of a fragment of such a matrix for encoding one character may be not less than 2x1x1 (fig.1). The number of the combinations in such a fragment allows encoding four characters. In the matrix fragment, 2x2x2 in size (fig.2), the number of combinations of "empty" and "filled" cells already allows encoding 256 characters covering all the Russian and English alphabets, figures and punctuation marks.

Further, after determining the required size of the three-dimensional matrix, the clusterization thereof is carried out, that is the division of the matrix throughout the height into single-, bi-, three-level or more fragments, each of which may comprise a unique combination of filled and unfilled cells determining which of the recognizable characters is encoded with this combination (fig. 3, 4).

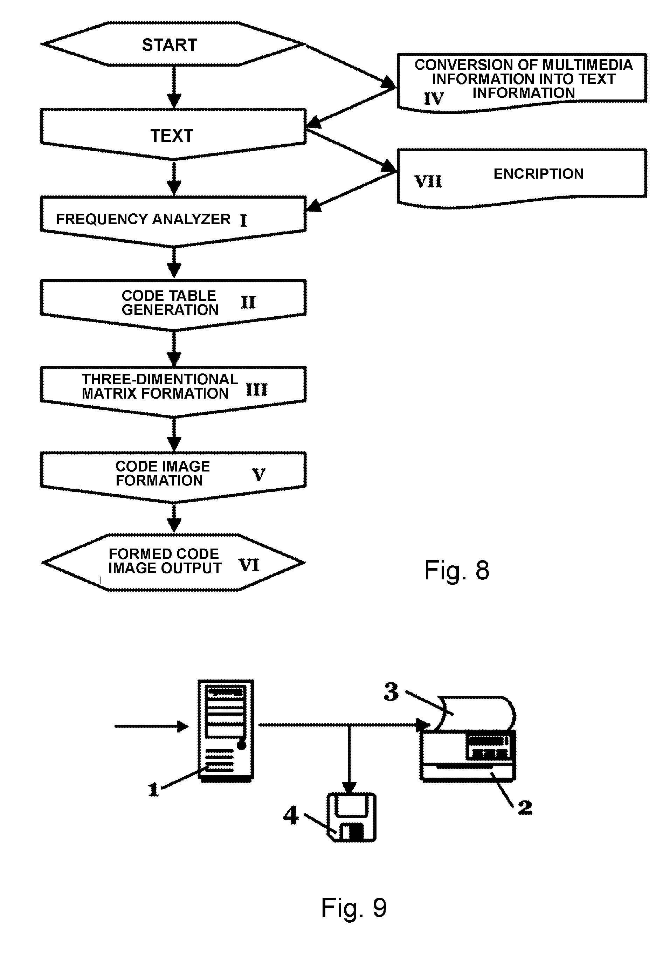

After the clusterization the information being encoded pass through a frequency analyzer (step I in fig.8) to determine all the characters and the most commonly occurring combinations of characters of "iy", "ni", "ko"-type and the like, on the basis of these results in step II setting a code table is carried out, said code table consists of a series of non-recurrent combinations of "empty" and "filled" cells corresponding to the recognizable alphabetic characters, figures, punctuation marks, the combination thereof or common abbreviations present in the volume of information to be encoded. During the code conversion table setting the correspondence of colours, nuances, geometrical shapes and the like to recognizable characters is set in the preferred embodiment by using a random number generator.

With the aid of the generated table to be encoded (the required) information (in step III) is encoded in the structure of the three-dimensional matrix. An example of such a matrix consisting of five bi-level fragments is presented in fig.5. The text information is directly encoded with the aid of a code table therewith, wherein all the necessary alphabetic characters, figures and punctuation marks are already present. Graphical, multimedia information (video, audio) and other data items which may be presented in the electronic form is pre-converted (in step IV, fig.8) into the text form by using the MIME methods (Base 64), UUEncode, XXEncode or with the aid of the own additional encode vocabulary.

In the following step V a code image is shaped, said image being the representation of a three-dimensional matrix provided with encoded information on the two-dimensional surface by sequentially projecting the matrix fragments on the plane and overlapping said fragments along two mutually perpendicular parameters. Moreover, in step VI a visual code image is obtained in the form of a planar lattice comprising m x n fields, wherein m and n are the numbers of lines and columns, respectively, of the three-dimensional base matrix. For this visualization to each fragment the colour, shape, configuration or combinations thereof belonging thereto are assigned. The preferred embodiment is illustrated in fig. 5 and 6. Herein to each matrix fragment the own colour is assigned (Black, Blue, Green, Yellow, Red), and the nuances of this colour are assigned to the corresponding levels of fragments having a space structure. In building a planar representation of the three-dimensional matrix (a code image) the following algorithm is used: on plane XY of the first fragment one of the cells is chosen and the presence of "filled" cells along the vertical Z is checked. If all the fragments of the matrix along the vertical Z within the chosen cell on plane XY are "empty", when representing on the plane, this field remains empty or is filled with a random colour not participating in encoding. If one "filled" cell occurs, this field when representing on the plane takes the colour of the corresponding fragment or the nuance assigned to the corresponding level of the given space fragment. If along the vertical Z two "filled" cells occur, this field during representing on the plane is divided into two parts vertically and horizontally, each of which takes the colour of the corresponding fragment or nuance of the corresponding level of the given fragment. In addition, the first, that is, left (in vertical division of the field) or top (in horizontal division) goes the colour of that fragment wherein the first "filled" cell was detected. If along the vertical Z three "filled" cells occur, the given field when representing on the plane is divided into three parts vertically or horizontally, each of which takes the colour of the corresponding fragment or nuance of the corresponding level of the present fragment. This process proceeds until all the "filled" cells along the vertical Z within the selected field on plane XY are found. After that the successive cell of the first from below matrix fragment is chosen and the whole procedure recurs until a code image is shaped in the form of a structure represented on the plane of the whole three-dimensional matrix. The division of the field being represented on the surface into horizontal or vertical parts therewith, if any several "filled" cells, may be carried out simultaneously and combined within the scope one document being encoded.

The code image may represent the structure of the three-dimensional matrix through not only colour or nuances thereof, but through a shape, graphical images and/or the combinations thereof. An example of the code image that is obtained by using a colour and shape (a circle and triangle) is presented in fig. 7.

The obtained code image representing the three-dimensional matrix structure projected on the plane may be stored in the electronic form or may be reproduced in a hard medium by using printing equipment.

The code image becomes more convenient in processing, if it additionally comprises reference areas, wherein references colours, nuances or shapes used for designating the matrix fragments are represented. The number and sequence thereof designate the number and sequence of the fragments, respectively, in the three-dimensional matrix used for encoding. The reference area is shaped by creating a combination representing the reference data items for at least one matrix fragment.

The reference area substantially functions as the control area facilitating recognizing and decoding the code image introduced into the decoding apparatus with the aid of a scanner or digital still camera.

The marks of the reference vertical and horizontal location of the code image serve for the same purposes.

To avoid possible information loss (in printing, scanning, recognizing) during encoding a possibility of surplus data presentation is put. One of the variants is using several levels of the matrix fragment in encoding, wherein the second level or the second or third levels comprise an additional duplicating combination of empty and filled cells. Thus, a possibility to restore the lost part of information appears.

Before encoding in step VII, information pre-encryption may be carried out. With that, a bi- or multi-level data acquisition system is contemplated. That is, some part of information is not encrypted at all and is open, and some part is encrypted and may be extracted only by the producer or inspecting person. The information may be divided both throughout the area (one piece is open, another is encrypted) and throughout the levels of a fragment (the 1-st - into the open part, the second one - into the closed part), or both the methods may be used in combination.

Also, to read hidden information corresponding optical, magnet inductive or chiseled sensors may be applied, given that dyes having the appropriate characteristics are used.

The data encoding apparatus according to the above described method is presented in fig. 9 in general form. The apparatus contains a personal computer 1 provided with appropriate software and a printer 2 to output the code image on a paper medium 3. Moreover, the obtained code image may be stored in the electronic form in a diskette 4.

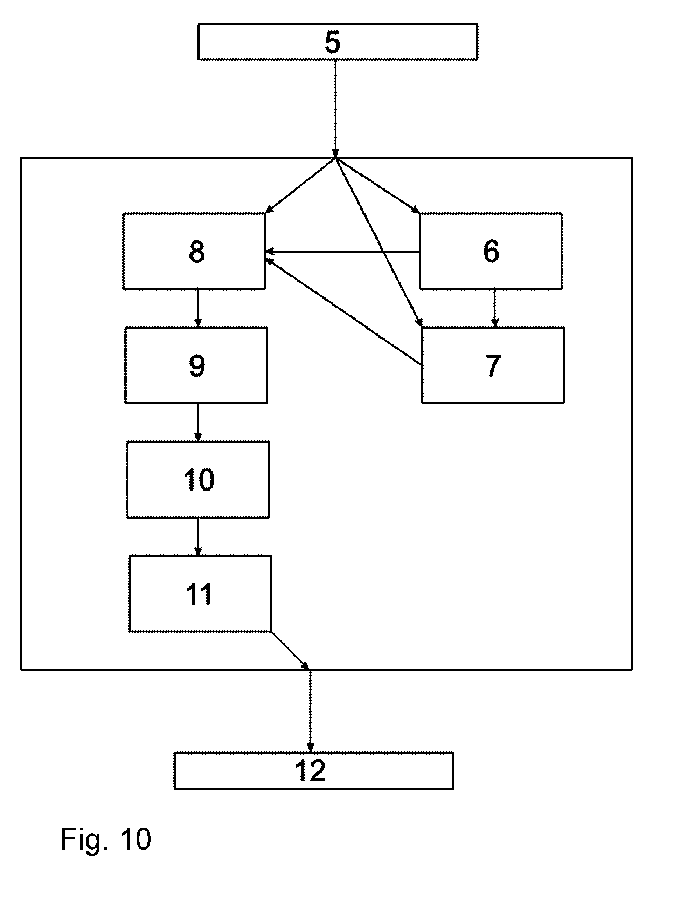

In more detail the encoding apparatus is presented in the form of a block diagram in fig. 10. The encoding apparatus contains a data input node 5, a unit 6 for converting data presented in the electronic form by using the MIME methods (Base 64), UUEncode, XXEncode or with the aid of the own additional encode vocabulary, an encryption unit 7 for pre-encrypting all or some part of data items, an accumulation unit 8 used for frequency analysis, forming and recoding the code conversion table, wherein the correspondences of the combinations of filled cells in the three-dimensional matrix fragments to the recognizable characters, including symbols, figures and combinations thereof are determined, data areas forming unit 9 used for acquiring and encoding required data items by using the code conversion table to shape the structure of the three-dimensional matrix provided with colour, tonal and shape-generating characteristics of the fragments thereof, a reference area forming unit 10 to determine during decoding, if the image shaped in the data areas a code image, a code image generator 11 used for forming a physical or electronic code image based on the projection of the formed three-dimensional matrix provided with encoded data and colour, tonal or shape-generating characteristics assigned to the fragments thereof and an unit 12 for outputting the code image shaped in the physical or electronic form.

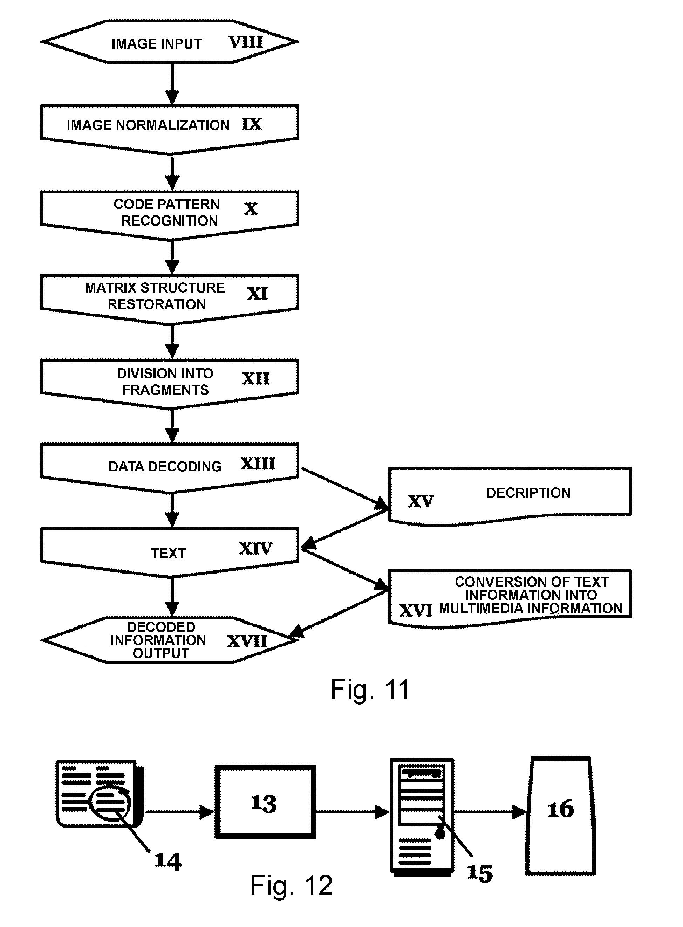

The code image decoding method presented in the form of a lattice comprising m x n fields, wherein m and n are the numbers of lines and columns of the three-dimensional base matrix, is schematically illustrated in fig. 11. The decoding method consists in that with the aid of information input equipment in step VIII the acquisition of the code image (reading a code pattern) is carried out, the data areas are determined, wherein required data are encoded and presented as images in colours, shapes and configurations or combinations thereof and a reference area that contains the basic colours, nuances, shapes or configurations or combinations thereof, according to the reference marks the location of the vertical and horizontal code image is corrected and the colour normalization is effected (step IX). Then in step X the recognition of the acquired code image is carried out and further according to the corresponding colour reference marks the matrix structure is determined, that is, the number of fragments and the attributes of colour, shape or combinations thereof assigned thereto. Moreover, in step XI the recognition of the field and restoration in fragments of the three-dimensional matrix structure take place. Then in step XII the separation of fragments comprising combinations of empty and filled cells representing the required encoded data is carried out. In step XIII decoding the data consisting of recognizable characters, including figures and symbols, determined in the code conversion table used for encoding is carried out, in step XIV the data are recorded in file, to which the attributes corresponding to the information they contain (text, image, video, audio, etc.) are assigned.

In the case of obtaining pre-encrypted information after terminating the decoding process of the required data items in step XV the data decryption is carried out by inverse conversion with the aid of the corresponding used encryption method.

The decoded data comprising graphical, audio, video information in step XVI are inverted by the executable files with the aid of the MIME methods (Base 64), UUEncode XXEncode or with the aid of the own additional encode vocabulary.

The resulting text and/or multimedia information (required data) is then transferred to the data output step XVII.

The data decoding apparatus according to the above described method is presented in the general form in fig. 12 and comprises an input node 13, as the input node a scanner or digital still camera may be used, for reading the code image 14 a personal computer 15 provided with the appropriate software, to the outlet of which a data output unit 16 is connected.

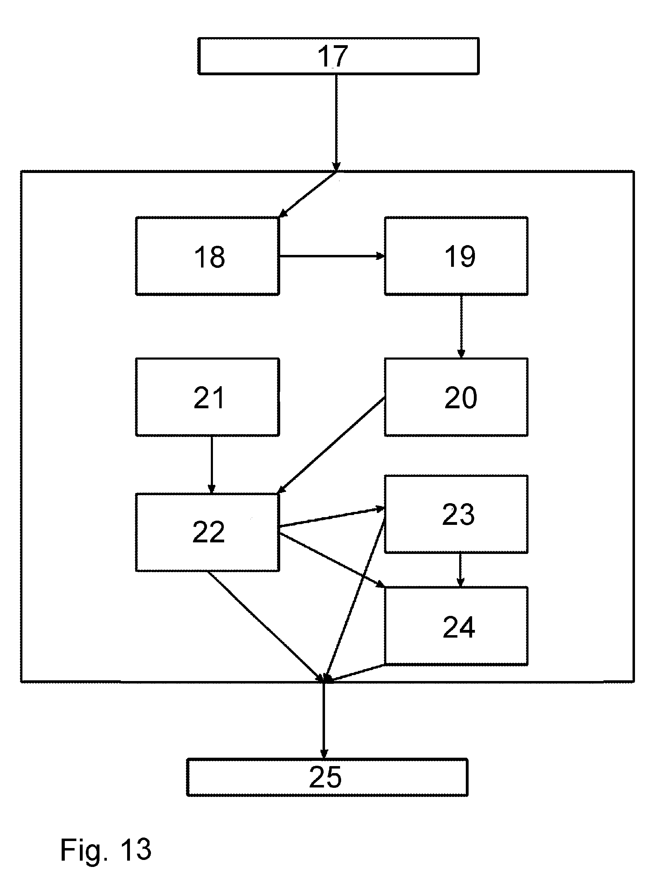

The block diagram of the decoding apparatus presented in fig. 13 comprises an input unit 17 used for acquiring the code image that comprises the structure of the three-dimensional matrix, a unit 18 for normalizing colours, nuances, shapes or combinations thereof in the acquired image on the basis of the reference area image, a reference area recognizer 19 to determine during decoding, if the image shaped in the data area is a code image, a unit 20 for structure restoring the three-dimensional matrix and dividing thereof into fragments comprising the data areas, wherein the required data are encoded and presented in the form of these fragments in accordance with colour, tonal or shape-generating characteristics, a storage unit 21 of the code conversion table data, a data area forming unit 22 used for decoding the required data by using the code conversion table based on the three-dimensional matrix structure provided with colour, tonal or shape-generating characteristics of the fragments thereof, a decryption unit 23 for obtaining data pre-encrypted before encoding, a unit 24 for data inverse conversion by using the MIME methods (Base 64), UUEncode the MIME methods (Base 64), UUEncode, XXEncode or with the aid of the own additional encode vocabulary and a data output unit 25.

### Industrial Applicability

The present invention is intended for applying a safety bar-code to label packing products and security papers for the purpose of protection of packed goods and security papers against forgery.

Preferably, the present invention is intended for protection and identification of printed products.

## Claims

1. A information encoding method consisting in setting a code conversion table, wherein different colours, nuances, geometrical shapes or configurations or combinations thereof are determined corresponding to recognizable characters, including figures and symbols, in setting data items used for encoding, in encoding these data items by using the code conversion table and in forming data areas provided with a code image, and in obtaining the image in the form of a physical or electronic code built on the basis of the data areas code image, **characterized in that** during the code conversion table setting a three-dimensional matrix is used, said matrix is divided into throughout the height into fragments, each of which comprises a combination of empty and filled cells corresponding to one unit of data items used for encoding, in assigning to each fragment the colour or nuance or graphical symbol or the combination thereof belonging thereto, in obtaining the code image by sequentially projecting the fragments on the plane and in overlapping said fragments along two mutually perpendicular parameters.

2. The method of claim 1, **characterized in that** as a unit of data items used for encoding a single recognizable character or a combination of several characters is used.

3. The method of claim 1, **characterized in that** graphical, video, audio information is pre-converted by the executable files with the aid of a MIME processing method (Base 64), UUEncode, XXEncode or with the aid of the own additional encode vocabulary.

4. The method of claim 1, **characterized in that** the code conversion table during setting the correspondence of colours, nuances, geometrical shapes to recognizable characters is set by using a random-number generator.

5. The method of claim 1, **characterized in that** a visual code image is presented in the form of a lattice comprising m x n fields, wherein m and n are the numbers of lines and columns in the three-dimensional base matrix, wherein each filled field contains as many different colours or nuances or shapes or configurations as the filled cells projected on this field contain matrix fragments.

6. The method of claim 1, **characterized in that** for at least one of the matrix fragments a combination representing reference data items is created and by using said combination the control reference area is found for determining if the image formed in the data areas is suitable for using as required data.

7. The method of claim 1, **characterized in that** the fragment has a two-dimensional structure.

8. The method of claim 1, **characterized in that** the fragment has a three-dimensional, at least bi-level structure.

9. The method of claim 1, **characterized in that** for each unit of data items used for encoding an additional duplicating combination of empty and filled cells is created.

10. The method of claim 1, **characterized in that** at least a part of data used for encoding is pre-encrypted.

11. The method of decoding a code image presented in the form of a lattice comprising m x n fields, wherein m x n are the numbers of lines and columns of the three-dimensional base matrix consists in acquiring the code image, in determining the data areas, wherein the required data are encoded and presented as images in colours, nuances, shapes or configurations or the combinations thereof and the reference area that contains the basic colours, nuances, shapes or configurations or the combinations thereof, in recognizing correct colours, nuances or configurations or the combinations thereof in the images presented in the data areas, in normalizing colours, nuances, shapes or configurations or the combinations thereof in the acquired image by comparing with the image in the reference area, in restoring the structure of the three-dimensional matrix and separating the fragments thereof comprising combinations of empty and filled cells representing encoded required data items, in decoding the required data items consisting of recognizable characters, including figures and symbols, determined in the code conversion table used during encoding.

12. The method of claim 11, **characterized in that** in case of obtaining pre-encoded information after terminating the process of decoding the required data items the data decryption is carried out by inverse conversion with the aid of the corresponding used encryption method.

13. The method of claim 12, **characterized in that** the decoded required data items comprising graphical, audio, video information are inverted by the executable files with the aid of a MIME processing method (BASE 64), UUEncode, XXEncode or with the aid of the own additional encode vocabulary.

14. An information encoding apparatus comprising an accumulation unit (8) capable of implementing a frequency analysis of text information, forming and recording the code conversion table based on the correspondence of the combinations of filled cells in the fragments of the three-dimensional matrix to the recognizable characters of the text information, including symbols, figures and the combinations thereof, a forming data areas unit (9) capable of acquiring and encoding the required data by using the code conversion table and forming the structure of the three-dimensional matrix assigning unique colour, total or shape-generating features to the fragments thereof, a reference areas forming unit (10) capable of determining during decoding if the image formed in the data areas is a code image, a code image generating unit (11) capable of shaping a physical or electronic code image in the form of the projection on the plane of the three-dimensional matrix provided with encoded data and a shaped code image output unit (12) in the physical or electronic form.

15. The encoding apparatus of claim 14, **characterized in that** additionally contains an encryption unit (7) capable of pre-encrypting at least a part of the data items used for encoding.

16. The encoding apparatus of claim 14, **characterized in that** additionally contains a unit (6) for converting the data presented in the electronic form with the aid of the MIME methods (Base 64), UUEncode, XXEncode or with the aid of the own additional encode vocabulary.

17. An decoding apparatus comprising a unit (21) for data storage used during encoding the code conversion table, wherein the correspondences of the combinations of filled cells in the three-dimensional matrix fragments to the recognizable characters, including symbols, figures and the combinations thereof, are determined, an code image input unit (17) presented by the three-dimensional matrix projected on the plane, a recognizer (19) of the reference areas in the acquired code image, a unit (18) for normalizing the colours, nuances, shapes or the combinations thereof in the acquired image on the basis of the reference area image, a unit (20) for restoring the structure of the three-dimensional matrix and separating the fragments thereof, comprising the data areas, a unit (22) for forming the data areas and decoding the required data by using the code conversion table data.

18. The apparatus of claim 17, **characterized in that** additionally comprises a decryption unit (23) capable of obtaining the required data encrypted before encoding.

19. The apparatus of claim 17, **characterized in that** additionally comprises a unit (24) of data inverse conversion with the aid of the MIME methods (Base 64), UUEncode, XXEncode or with the aid of the own additional encode vocabulary.
